# EUROPEAN PATENT SPECIFICATION

(11) **EP 2 166 326 B1**
(45) Date of publication and mention of the grant of the patent: **13.02.2013**
(21) Application number: 09170087.2
(22) Date of filing: 11.09.2009
(51) Int. Cl.: G01K 1/08, G01K 13/02

(54) **Temperature sensor unit for domestic appliances and method of fabricating the same**
Temperatursensor für Haushaltsgeräte und dessen Herstellungsverfahren
Capteur de température pour appareil ménager et sa méthode de fabrication

(30) Priority: 22.09.2008 LU 91481
(43) Date of publication of application: 24.03.2010
(73) Proprietor: ELTH S.A., L-7327 Steinsel (LU)
(72) Inventor: Diedrich, Marc, 7480, TUNTANGE (LU)
(74) Representative: Office Freylinger

(56) References cited:
- EP-A- 1 645 857
- US-A- 5 446 531
- US-A1- 2002 071 475
- US-B1- 6 337 470

## Description

### Technical Field

The present invention relates to a temperature sensor unit to be used as a component part of a domestic appliance (e.g. a washing machine, a dishwashing machine, a clothes drier or a washer-drier) for measuring the temperature of a processing fluid, such as washing water or drying air/vapour. The invention also relates to the method of fabricating this type of temperature sensor unit.

### Background Art

European patent application EP 1 645 857 discloses a temperature sensor unit for domestic appliances. This unit comprises a sensor housing having a sensing portion configured to be in contact with fluid to be sensed and enclosing a temperature-sensitive component. Instead of conventional wiring, EP 1 645 857 proposes a printed circuit assembly (PCA) for electrical connection of the temperature-sensitive component. The PCA includes a printed circuit board (PCB), a sensing component and pads for electrical connection of the latter. More specifically, the PCA has a first end region, in which - taking advantage of the PCA configuration - a surface-mount device (SMD) negative temperature coefficient (NTC) sensor pellet is mounted as temperature-sensitive component. Printed tracks connect the NTC pellet with two connector pads arranged in a second end region of the PCA for plug-and-socket type connection of the NTC pellet to a readout/control device of a domestic appliance. Except for the second end region, in which the connector pads have to remain accessible, the PCA is enclosed by the sensor housing. According to EP 1 645 857, the sensor housing is made of two constituent elements, namely an external hollow body or shell made of polymeric material and a potting compound, for instance an epoxy resin. The hollow body serves as outer shell to accommodate all but the second end portion of the PCA with sufficient clearance for mounting purposes and is part of the finished unit. The potting compound is poured into the hollow body to fill the mounting clearance between the PCA and the body in order to mechanically fix and safely encapsulate the PCA within the body, i.e. the potting shell.

The sensor unit proposed in EP 1 645 857 presents the notable advantage of reducing unit cost and streamlining fabrication by proposing electrical connection via a prefabricated PCA instead of conventional wiring. A drawback of the sensor unit configuration according to EP 1 645 857 however is that a loss of "glue" effect of the potting compound can occur due to hot-cold cycles affecting the sensor unit. In other words, the cured potting compound may loose adherence to the hollow polymeric body. This may affect heat transmission from the processing fluid to the temperature-sensitive component resulting in a certain tolerance range of heat transmission characteristics. Furthermore, even though the teachings of EP 1 645 857 have the benefit of rendering manufacturing of high-quality sensor units more economical, they leave room for further improvement regarding cost-efficiency, in particular concerning the proposed approach for encapsulation of the PCA.

U.S. patent no. 6'337'470 discloses various thermal systems' components, which are moulded within a polymer composite sheath. As a specific embodiment (see FIG.10-12), US 6'337'470 proposes a temperature sensor IC mounted on a printed circuit board (PCB). In its first fabrication step, the assembly of IC and PCB is secured in a pre-moulded polymer composite cradle specifically adapted to receive the PCB. Thereafter, in a second step, both the PCB and the cradle are encapsulated in a shell by over-moulding with the polymer composite that forms a sensor housing. Connecting cables that protrude from the final moulded part need to be soldered to PCB prior the over-moulding process and, like the PCB itself, need to be properly maintained in position during over-moulding. Hence, the need for an additional pre-fabricated cradle.

Another device in which a substrate, e.g. a PCB, with a plurality of fluid condition sensors is encapsulated by over-moulding is disclosed in U.S. patent no. 5'446'531. This patent also proposes cable conductors that protrude from the over-moulded housing and serve to electrically connect the fully encapsulated PCB via a separate external connector. The conductors pass through a threaded connecting piece provided on the bottom side of the over-moulded housing. The threaded connecting piece allows mechanical fastening to an appliance in which the sensors are to be used.

### Technical Problem

It is an object of the present invention to provide a high-quality temperature sensor unit for domestic appliances, the fabrication of which is cost-effective compared to the prior art. This object is achieved by a temperature sensor unit as claimed in claim 1 and a method of fabricating the same according to claim 10.

### General Description of the Invention

The present invention proposes a temperature sensor unit for domestic appliances, in particular for washing machines, dishwashing machines, clothes driers, washer-driers or similar appliances. The proposed sensor unit comprises a PCA and a sensor housing, the latter forming a rigid casing that encloses and protects critical regions of the former. The PCA has an elongated shape. It includes a first end region with a temperature-sensitive electric/electronic component, e.g. PTC or NTC thermistor, a second end region with two printed connector pads used for connecting the temperature-sensitive component to an electronic readout/control device in the domestic appliance, and an intermediate region between the two end regions. For measuring temperature, the sensor housing has a sensing portion configured to be in contact with the processing fluid to be monitored. The sensing portion therefore encloses the first end region of the PCA, i.e. the portion that bears the temperature-sensitive component. The housing also has a mounting portion for mechanically mounting i.e. fastening the sensor unit the appliance.

According to the present invention and in order to overcome the above-mentioned problem, the sensor housing itself consists of a plastic material moulded around the PCA such that the first end region of the PCA, which includes the temperature-sensitive component, and the intermediate region are both embedded in this plastic material. Further according to the invention, the second end region of the PCA, which carries the connector pads, protrudes from the moulted plastic sensor housing, whereby it is accessible for use as an integral part of an electrical connector. Additionally, also according to the invention, the housing is moulded in such a way that a portion of its constituent plastic material forms the mechanical mounting portion for fastening the sensor unit to an appliance. In other words, the sensor housing, including the mounting portion, is exclusively and integrally made in one step and of one type of plastic material by moulding this material immediately around the relevant regions of the PCA.

Accordingly, instead of traditional potting-type encapsulation with a prefabricated potting shell of a first material and a supplementary potting compound, the present invention proposes combining the functions of circuit encapsulation, outer protection as well as functional shaping by means of a single housing formed integrally of one and the same kind of plastic material that encapsulates the PCA and forms the functional and protective shell. Since the outer shell is created by moulding at the time of encapsulation, the need for acquiring and storing potting shells for each separate sensor design is eliminated. Additional flexibility regarding the external shape of the sensor unit is gained, since only the moulding matrices of the moulding tool need to be modified. The fabrication process is simplified, among others because the relatively cumbersome steps of properly positioning and fixing the PCA in a potting shell and of properly filling the latter with a potting compound are avoided. In view of these benefits, it will be understood that the invention simplifies the fabrication process and hence enables increased production output and concomitant unit cost reduction. The invention further offers certain quality-related benefits. For instance, part-to-part reproducibility and accuracy of wall-thickness of the sensor housing is improved. Thereby, a reduced tolerance extent is achieved (permissible variation, tolerance range), in particular of heat transmission characteristics. A further reduction of the tolerance extent of heat transmission characteristics is achieved since the risk of a loss of adherence between the temperature sensitive component and the housing material is eliminated or at least substantially reduced. Furthermore, generally smaller wall-thickness can be achieved to reduce spacing between the temperature-sensitive component and the fluid to be sensed. As a result, the sensor response time is reduced.

Furthermore, the present invention proposes a temperature sensor in which the PCA, i.e. the supporting material of the sensor, protrudes as a rigid part directly from the housing that is produced by over-moulding. In contrast to US 6'337'470, there is thus no need for a two-step process, in which a pre-moulded cradle is used to ascertain fastening of the PCB and proper positioning of the connecting cables during the over-moulding process that forms the sensor housing. There is also no need to solder connecting wires to the printed circuit, since the PCA itself acts as a connector specifically shaped (regarding thickness, width, pad size and pitch) for cooperating with a counter-connector. In contrast to, US 5'446'531, the present invention proposes a solution that does not require a mechanical mounting piece and a separate external electrical connector. The present invention proposes a system, in which a portion of the printed circuit assembly (substrate) is used directly as part of the electrical connector, and in which part of the moulded sensor housing is used for mechanical mounting to a cooperating counter-part. Accordingly, the mould is specifically designed to form a sensor housing that can be fastened directly and, e.g. by adding a suitable seal such as an O-ring, tightly to a cooperating counter-connector, preferably a dual-function mechanical-electrical counter-connector, of the appliance. The moulded housing thus acts as (1) a protector and electrical insulator for the temperature-sensitive component, as (2) a mechanical mounting portion that cooperates with a counter-part, and as (3) an electrical connector casing that together with the protruding circuit board portion of the PCA forms an electrical connector. As will be understood, the proposed solution enables a more cost-efficient fabrication.

Preferred embodiments of the proposed temperature sensor unit are defined in the dependent claims 2-8.

The present invention also proposes a method of fabricating i.e. producing the sensor unit as set out above. This method is set out in claim 9.

### Brief Description of the Drawing

A preferred embodiment of the invention will now be described, by way of example, with reference to the accompanying drawing, wherein:

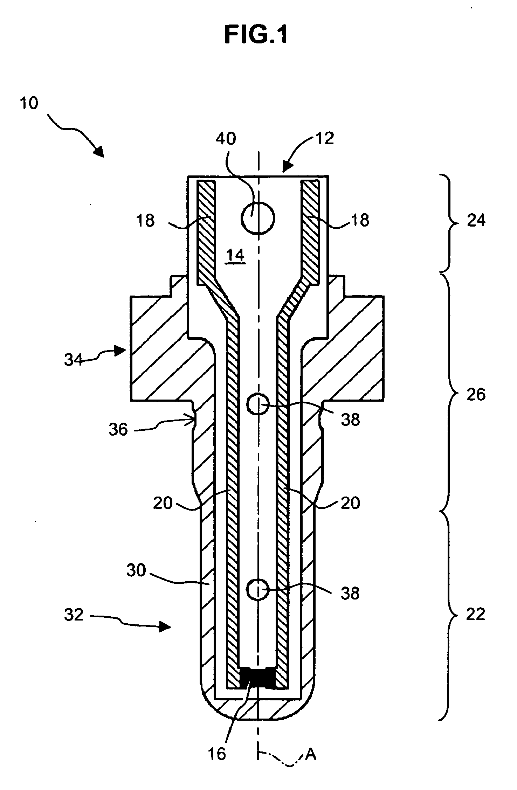

FIG.1 is a schematic longitudinal cross-sectional view of a temperature sensor unit according to the invention.

### Detailed Description of a preferred Embodiment with respect to the Drawing

FIG.1 shows a temperature sensor unit, generally identified by reference numeral 10, which is configured for use as a component part in a domestic appliance (not shown). The unit 10 comprises a printed circuit assembly (PCA) 12 that consists of an elongated printed circuit board (PCB) 14 and a thermistor 16 of the surface-mount device (SMD) type as a temperature-sensitive component. The thermistor 16 may be of the negative temperature coefficient (NTC) or positive temperature coefficient (PTC) type as required. The PCB 14 includes two connector pads 18 that form edge-connector fingers for plugging the thermistor 16 to an electronic readout/control device of the domestic appliance. Alternatively, the connector pads 18 may also be used as lands for mounting a supplementary connector component (not shown) onto the PCB 14. Respective printed conductor tracks 20 connect the connector pads 18 to soldering pads to which the terminals of the thermistor 16 are soldered in surface mount technology.

As seen in FIG.1, the PCA 12, more precisely the PCB 14, has a first end region 22, in which the thermistor 16 is arranged, and a longitudinally opposite second end region 24, in which the connector pads 18 are provided. An intermediate region 26 of the PCA 12 carries the tracks 20. As apparent from FIG.1, the temperature sensor unit 10 comprises a one-piece sensor housing 30. The sensor housing 30 consists of a suitable plastic material, i.e. is exclusively made of the same type of constituent plastic material. More specifically, the housing 30 is integrally moulded around the first end region 22 and around the intermediate region 26 of the PCA 12 such that the latter regions 22, 26 are embedded in the plastic material of the housing 30, i.e. enclosed and firmly fixed in the surrounding mass of plastic material that constitutes the housing 30. In contrast, the second end region 24 that includes the connector pads 18, which have to be accessible, protrudes from the housing 30.

The portion of the housing 30 that surrounds the first end region 22 of the PCA 12 serves as a sensing portion 32 configured to be in contact with a processing fluid of which the temperature is to be sensed. The portion of the housing 30 that surrounds the intermediate region 26 comprises a mounting portion 34 of suitable configuration, e.g. that of a bayonet-type or of a snap-in coupling, for mounting the temperature sensor unit 10 into a cooperating seat in the domestic appliance. In particular, the mounting portion 34 may cooperate with a seat in the shell of a multi-conductor connector that comprises more conductor pads/pins than those for temperature sensing, e.g. further connectors for a heating element and/or other component parts of the appliance. The second end region 24 and the connector pads 18 of the PCA 12 are accordingly configured to form part of the connector pads/pins of the multi-conductor connector. Adjacent to the mounting portion 34 and to the side of the sensing portion 32, the integrally moulded housing 30 further comprises a shoulder with a circumferential groove 36 for holding an o-ring seal (not shown) used to form a seal between the housing 30 and the seat into which the unit 10 is to be mounted. Except for the mounting portion 34, the housing 30 preferably has the shape of a solid of revolution about longitudinal axis A.

In order to improve the axial fixation of the PCA 12 within the integrally moulded housing 30, the PCB 14 comprises two though holes 38 arranged on axis A, through which the plastic material of the housing 30 forms an axial fastening through the PCA 12. The second end region 24 of the PCB 14 comprises a further through hole 40 used for holding the PCA 12 cantilevered during moulding of the housing 30.

Regarding fabrication of the unit 10, it will be appreciated that the housing 30 consists of a single type of plastic material directly moulded in a single step around the PCA 12. As a result, the relevant regions 22, 26 and especially the thermistor 16, which are to project into the space containing processing fluid, are embedded directly in the very plastic material that also constitutes the outer shell of the temperature sensor unit 10. In other words, the housing 30 serves multiple functions, i.e. providing the PCA 12, especially the thermistor 16, with an outer protective shell and safe encapsulation, e.g. against moisture and corrosive agents, as well as providing the functional shape of the unit 10 in general, and of the sensing and mounting portions 32, 34 in particular. The integrally moulded housing 30 is made of a polymeric material, preferably a thermoplastic polymer, more preferably a suitable polymer having high thermal conductivity. Ideally, once hardened the chosen polymer has isotropic properties regarding thermal expansion, i.e. it presents thermal expansion that is equal in all directions when thermal energy is provided to the housing 30. As regards fabrication of the temperature sensor unit 10 the two major steps of a preferred implementation are:
a. providing a PCA 12 as prefabricated part and arranging the latter in a two-part mould conjugated in shape (negative shape) to the housing 30, the PCA 12 being cantilevered at the second end region 24;
b. creating a sensor housing 30 consisting entirely of the same type of plastic material by moulding such plastic material around the PCA 12 such that the first end region 22 and the intermediate region 26, or at least the first end region 22 that includes the temperature-sensitive component 16, is embedded directly in this plastic material.

Moulding methods appropriate for producing plastic parts are as such generally known to the skilled person. A preferred moulding method for producing the proposed sensor unit 10 is injection moulding. In order to form the housing 30 around the PCA 12, the mould typically comprises two or more matrix parts (not shown) defining together a hollow that is conjugated to the shape of the housing 30. During the injection process, a batch of several units 10 are preferably produced simultaneously using a moulding tool equipped with several moulds. The PCA 12 can be fixed within the mould in cantilevered manner by means of through hole 40 and can be oriented during moulding in any position, preferably in horizontal position.

### Legend - List of Reference Signs:

- 10: temperature sensor unit
- 12: printed circuit assembly (PCA)
- 14: printed circuit board (PCB)
- 16: thermistor (temperature-sensitive component)
- 18: connector pads
- 20: printed tracks
- 22: first end region (of PCA)
- 24: second end region (of PCA)
- 26: intermediate region (of PCA)
- 30: housing
- 32: sensing portion (of housing)
- 34: mounting portion (of housing)
- 36: groove (for o-ring seal)
- 38: through holes (for axial fixation)
- 40: through hole (for moulding)

## Claims

1. A temperature sensor unit (10) for domestic appliances, in particular for washing machines, dishwashing machines, clothes driers or washer-driers, said sensor unit comprising:
a printed circuit assembly (12) consisting of a printed circuit board (14) having an elongated shape, a first end region (22) with a temperature-sensitive component (16), a second end region (24) with two connector pads (18) for connecting said temperature-sensitive component to a readout/control device of said domestic appliance, and an intermediate region (26) in between said first and second end regions;
a sensor housing (30) with a sensing portion (32), which is configured to be in contact with fluid to be sensed and encloses said first end region of said printed circuit board (14), and a mounting portion (34) for mounting said sensor unit to a domestic appliance; wherein
said sensor housing (30) consists of a plastic material moulded around said printed circuit board (14) such that:
said first end region (22) of said printed circuit board (14), including said temperature-sensitive component, and said intermediate region (26) of said printed circuit board (14) are embedded in said plastic material;
said moulded plastic material forms said mounting portion (34) **characterized in that** said sensor housing (30) consists of a plastic material moulded around said printed circuit board (14) such that: said second end region (24) of said printed circuit board (14), including said connector pads, protrudes from said sensor housing.

2. The temperature sensor unit according to claim 1, wherein said printed circuit board (14) comprises at least one through hole (38) in said first end region and/or in said intermediate region, said plastic material bridging through said through hole (38) so as to axially secure said printed circuit assembly within the plastic material of said sensor housing.

3. The temperature sensor unit according to claim 1 or 2, wherein said mounting portion (34) is formed by a portion of said plastic material that is moulded around said printed circuit assembly adjacent said second end region (24) such that said second end region including said connector pads protrudes from said mounting portion.

4. The temperature sensor unit according to claim 3, wherein said mounting portion (34) and said connector pads (18) are configured to cooperate with the shell of a multi-conductor connector of said domestic appliance, said connector including further connector pads/pins.

5. The temperature sensor unit according to any one of the preceding claims, wherein said printed circuit assembly (12) consists of
a. an elongated printed circuit board (14) including said two connector pads (18) forming edge connector fingers, two soldering pads and two conductive tracks (20) connecting either of said connector fingers to either of said soldering pads respectively; and
b. a thermistor (16), preferably in surface mount technology, that is soldered to said soldering pads.

6. The temperature sensor unit according to any one of the preceding claims, wherein said plastic material is a polymer material, preferably a thermoplastic polymer material.

7. The temperature sensor unit according to any one of the preceding claims, wherein said sensor housing (30) is fabricated integrally of one-piece and preferably of an isotropic plastic material.

8. A domestic appliance, in particular a washing machine, a dishwashing machine, a clothes-drier or a washer-drier, comprising a temperature sensor unit according to any one of claims 1 to 7.

9. Method of fabricating a temperature sensor unit (10) for a domestic appliance, said method comprising:
providing a printed circuit assembly (12) consisting of a printed circuit board (14) having an elongated shape, a first end region (22) with a temperature-sensitive component, a second end region (24) with two connector pads for connecting said temperature-sensitive component to an external readout/control device, and an intermediate region (26) in between said first and second end regions;
creating a sensor housing (30) consisting of a plastic material, said housing having a sensing portion (32) configured to be in contact with fluid to be sensed and a mounting portion (34) for mounting said sensor unit to a domestic appliance, by moulding said plastic material around said printed circuit board (14) such that:
said first end region (22) of said printed circuit board (14), including said temperature-sensitive component, and said intermediate region (26) of said printed circuit board (14) are embedded in said plastic material;
said moulded plastic material forms said mounting portion (34), **characterized in that** the step of creating a sensor housing (30) consisting of a plastic material by moulding said plastic material around said printed circuit is such that: said second end region (24) of said printed circuit board (14), including said connector pads, protrudes from said sensor housing.

## Patentansprüche

1. Temperatursensoreinheit (10) für Haushaltsgeräte, insbesondere für Waschmaschinen, Geschirrspülmaschinen, Wäschetrockner oder Waschtrockner, wobei die Sensoreinheit aufweist:
einen Leiterplattenaufbau (12), bestehend aus einer Leiterplatte (14) von länglicher Form, einem ersten Endbereich (22) mit einem temperaturempfindlichen Bauteil (16), einem zweiten Endbereich (24) mit zwei Kontaktflecken (18) zum Verbinden des temperaturempfindlichen Bauteils mit einer Auslese-/Steuervorrichtung des Haushaltsgeräts, und einem Zwischenbereich (26) zwischen dem ersten und dem zweiten Endbereich;
ein Sensorgehäuse (30) mit einem Messabschnitt (32), der so ausgebildet ist, dass er mit zu messendem Fluid in Kontakt ist und den ersten Endbereich der Leiterplatte (14) umschließt, und einem Befestigungsabschnitt (34) zum Anbringen der Sensoreinheit an einem Haushaltsgerät; wobei
das Sensorgehäuse (30) aus einem Kunststoffmaterial besteht, das derart um die Leiterplatte (14) gegossen ist, dass:
der erste Endbereich (22) der Leiterplatte (14), einschließlich des temperaturempfindlichen Bauteils, und der Zwischenbereich (26) der Leiterplatte (14) in das Kunststoffmaterial eingebettet sind;
das gegossene Kunststoffmaterial den Befestigungsabschnitt (34) bildet;
**dadurch gekennzeichnet, dass** das Sensorgehäuse (30) aus einem Kunststoffmaterial besteht, das derart um die Leiterplatte (14) gegossen ist, dass:
der zweite Endbereich (24) der Leiterplatte (14) einschließlich der Kontaktflecken aus dem Sensorgehäuse vorsteht.

2. Temperatursensoreinheit nach Anspruch 1, wobei die Leiterplatte (14) mindestens ein Durchgangsloch (38) in dem ersten Endbereich und/oder in dem Zwischenbereich aufweist, wobei sich das Kunststoffmaterial durch das Durchgangsloch erstreckt, um den Leiterplattenaufbau innerhalb des Kunststoffmaterials des Sensorgehäuses axial zu sichern.

3. Temperatursensoreinheit nach Anspruch 1 oder 2, wobei der Befestigungsabschnitt (34) durch einen Abschnitt des Kunststoffmaterials gebildet ist, der angrenzend an den zweiten Endbereich (24) derart um den Leiterplattenaufbau gegossen ist, dass der zweite Endbereich einschließlich der Kontaktflecken von dem Befestigungsabschnitt vorsteht.

4. Temperatursensoreinheit nach Anspruch 3, wobei der Befestigungsabschnitt (34) und die Kontaktflecken (18) so ausgebildet sind, dass sie mit dem Gehäuse eines Mehrleiterverbindungsstückes des Haushaltsgeräts zusammenwirken, wobei das Verbindungsstück weitere Kontaktflecken/Steckerstifte umfasst.

5. Temperatursensoreinheit nach einem der vorhergehenden Ansprüche, wobei der Leiterplattenaufbau (12) aus Folgendem besteht:
einer länglichen Leiterplatte (14), die die zwei Kontaktflecken (18) umfasst, die Stiftsockelfinger bilden, zwei Lötaugen und zwei Leiterbahnen (20), die jeweils die Stiftsockelfinger mit den Lötaugen verbindet; und
einem Thermistor (16), vorzugsweise in Oberflächenmontage, der an die Lötaugen gelötet ist.

6. Temperatursensoreinheit nach einem der vorhergehenden Ansprüche, wobei das Kunststoffmaterial ein Polymermaterial, vorzugsweise ein thermoplastisches Polymermaterial ist.

7. Temperatursensoreinheit nach einem der vorhergehenden Ansprüche, wobei das Sensorgehäuse (30) aus einem Stück und vorzugsweise aus einem isotropen Kunststoffmaterial gefertigt ist.

8. Haushaltsgerät, insbesondere eine Waschmaschine, eine Geschirrspülmaschine, ein Wäschetrockner oder ein Waschtrockner, aufweisend eine Temperatursensoreinheit nach einem der Ansprüche 1 bis 7.

9. Verfahren zur Herstellung einer Temperatursensoreinheit (10) für ein Haushaltsgerät, wobei das Verfahren aufweist:
Vorsehen eines Leiterplattenaufbaus (12), bestehend aus einer Leiterplatte (14) von länglicher Form, einem ersten Endbereich (22) mit einem temperaturempfindlichen Bauteil, einem zweiten Endbereich (24) mit zwei Kontaktflecken zum Verbinden des temperaturempfindlichen Bauteils mit einer externen Auslese-/Steuervorrichtung, und einem Zwischenbereich (26) zwischen dem ersten und dem zweiten Endbereich;
Schaffen eines Sensorgehäuses (30), das aus einem Kunststoffmaterial besteht, durch Gießen des Kunststoffmaterials um die Leiterplatte (14), wobei das Gehäuse einen Messabschnitt (32), der so ausgebildet ist, dass er in Kontakt mit zu messendem Fluid ist, und einen Befestigungsabschnitt (34) zum Befestigen der Sensoreinheit an einem Haushaltsgerät aufweist, so dass
der erste Endbereich (22) der Leiterplatte (14), einschließlich des temperaturempfindlichen Bauteils und der Zwischenbereich (26) der Leiterplatte (14) in das Kunststoffmaterial eingebettet sind;
das gegossene Kunststoffmaterial den Befestigungsabschnitt (34) bildet;
**dadurch gekennzeichnet, dass** der Schritt des Schaffens eines Sensorgehäuses (30), das aus einem Kunststoffmaterial besteht, durch Gießen des Kunststoffmaterials um die Leiterplatte derart ist, dass
der zweite Endbereich (24) der Leiterplatte (14) einschließlich der Kontaktflecken von dem Sensorgehäuse vorsteht.

## Revendications

1. Unité de capteur (10) de température pour des appareils domestiques, en particulier pour des lave-linge, des lave-vaisselle, des sèche-linge ou des lave-linge séchants, ladite unité de capteur comprenant :
un ensemble de circuit imprimé (12) consistant en une carte de circuit imprimé (14) ayant une forme allongée, une première région d'extrémité (22) avec un composant sensible à la température (16), une deuxième région d'extrémité (24) avec deux plots de connexion (18) pour connecter ledit composant sensible à la température à un dispositif de lecture/commande dudit appareil domestique, et une région intermédiaire (26) entre lesdites première et deuxième régions d'extrémité ;
un logement (30) de capteur avec une partie de captage (32), qui est configurée de manière à être en contact avec un fluide à capter et englobe ladite première région d'extrémité de ladite carte de circuit imprimé (14), et une partie de montage (34) pour monter ladite unité de capteur sur un appareil domestique ; dans laquelle
ledit logement (30) de capteur consiste en un matériau plastique moulé autour de ladite carte de circuit imprimé (14) de telle manière que :
ladite première région d'extrémité (22) de ladite carte de circuit imprimé (14), incluant ledit composant sensible à la température, et ladite région intermédiaire (26) de ladite carte de circuit imprimé (14) sont noyées dans ledit matériau plastique ;
ledit matériau plastique moulé forme ladite partie de montage (34),
**caractérisée en ce que** ledit logement (30) de capteur consiste en un matériau plastique moulé autour de ladite carte de circuit imprimé (14) de telle manière que :
ladite deuxième région d'extrémité (24) de ladite carte de circuit imprimé (14), incluant lesdits plots de connexion, fait saillie dudit logement de capteur.

2. Unité de capteur de température selon la revendication 1, dans laquelle ladite carte de circuit imprimé (14) comprend au moins un trou traversant (38) dans ladite première région d'extrémité et/ou dans ladite région intermédiaire, ledit matériau plastique faisant un pont au travers dudit trou traversant (38) de manière à immobiliser axialement ledit ensemble de circuit imprimé à l'intérieur du matériau plastique dudit logement de capteur.

3. Unité de capteur de température selon la revendication 1 ou 2, dans laquelle ladite partie de montage (34) est formée par une partie dudit matériau plastique qui est moulé autour dudit ensemble de circuit imprimé adjacent à ladite deuxième région d'extrémité (24) de telle manière que ladite deuxième région d'extrémité incluant lesdits plots de connexion fait saillie de ladite partie de montage.

4. Unité de capteur de température selon la revendication 3, dans laquelle ladite partie de montage (34) et lesdits plots de connexion (18) sont configurés de manière à coopérer avec le boîtier d'un connecteur à conducteurs multiples dudit appareil domestique, ledit connecteur incluant d'autres plots/broches de connexion.

5. Unité de capteur de température selon l'une quelconque des revendications précédentes, dans laquelle ledit ensemble de circuit imprimé (12) consiste en
a. une carte de circuit imprimé (14) allongée incluant lesdits deux plots de connexion (18) formant des languettes de connexion d'extrémité de carte, deux plots de brasage et deux pistes conductrices (20) connectant l'une ou l'autre desdites languettes de connexion à l'un ou l'autre desdits plots de brasage respectivement ; et
b. un thermistor (16), préférablement de technologie de montage en surface, qui est brasé sur lesdits plots de brasage.

6. Unité de capteur de température selon l'une quelconque des revendications précédentes, dans laquelle ledit matériau plastique est un matériau polymère, préférablement un matériau polymère thermoplastique.

7. Unité de capteur de température selon l'une quelconque des revendications précédentes, dans laquelle ledit logement (30) de capteur est fabriqué de façon intégrale en une seule pièce et préférablement d'un matériau plastique isotrope.

8. Appareil domestique, en particulier un lave-linge, un lave-vaisselle, un sèche-linge ou un lave-linge séchant, comprenant une unité de capteur de température selon l'une quelconque des revendications 1 à 7.

9. Procédé de fabrication d'une unité de capteur (10) de température pour un appareil domestique, ledit procédé comprenant :
la prévision d'un ensemble de circuit imprimé (12) consistant en une carte de circuit imprimé (14) ayant une forme allongée, une première région d'extrémité (22) avec un composant sensible à la température, une deuxième région d'extrémité (24) avec deux plots de connexion pour connecter ledit composant sensible à la température à un dispositif de lecture/commande externe, et une région intermédiaire (26) entre lesdites première et deuxième régions d'extrémité ;
la création d'un logement (30) de capteur consistant en un matériau plastique, ledit logement ayant une partie de captage (32) configurée de manière à être en contact avec un fluide à capter et une partie de montage (34) pour monter ladite unité de capteur sur un appareil domestique, en moulant ledit matériau plastique autour de ladite carte de circuit imprimé (14) de telle manière que :
ladite première région d'extrémité (22) de ladite carte de circuit imprimé (14), incluant ledit composant sensible à la température, et ladite région intermédiaire (26) de ladite carte de circuit imprimé (14) sont noyées dans ledit matériau plastique ;
ledit matériau plastique moulé forme ladite partie de montage (34),
**caractérisée en ce que** ladite étape de création d'un logement (30) de capteur consistant en un matériau plastique par moulage dudit matériau plastique autour de ladite carte de circuit imprimé est telle que :
ladite deuxième région d'extrémité (24) de ladite carte de circuit imprimé (14), incluant lesdits plots de connexion, fait saillie dudit logement de capteur.
